Europäisches Patentamt

European Patent Office

Office européen des brevets

(11) Numéro de publication : **0 109 100**
**B1**

(12) **FASCICULE DE BREVET EUROPÉEN**

(45) Date de publication du fascicule du brevet :
07.05.86

(21) Numéro de dépôt : 83201345.2

(22) Date de dépôt : 20.09.83

(51) Int. Cl.⁴ : **H 01 G   4/24**, H 01 G   4/38,
**H 01 G   1/11**

(54) **Procédé de fabrication d'un condensateur auto-régénérable.**

(30) Priorité : 20.10.82 EP 82870056
04.02.83 EP 83200184

(43) Date de publication de la demande :
23.05.84 Bulletin 84/21

(45) Mention de la délivrance du brevet :
07.05.86 Bulletin 86/19

(84) Etats contractants désignés :
AT BE CH DE FR GB IT LI LU NL SE

(56) Documents cités :
BE-A-   793 388
DE-A- 1 439 334
DE-A- 2 636 544
DE-A- 2 641 182
DE-A- 2 650 468
GB-A-   807 475
US-A- 4 170 812

(73) Titulaire : **ASEA-JUMET, Société Anonyme**
**Siège Social Zone Industrielle Jumet-Gosselies**
**B-6040 Jumet (BE)**

(72) Inventeur : **Voglaire, Franz**
**Rue Bois des Collines 15**
**B-1420 Braine L'Alleud (BE)**

(74) Mandataire : **Bossard, Franz et al**
**ACEC - Service des Brevets Boîte Postale 4**
**B-6000 Charleroi (BE)**

Jouve, 18, rue St-Denis, 75001 Paris, France

## Description

Il existe des condensateurs auto-régénérables constitués d'un rouleau de rubans en matière diélectrique recouverts de couches métalliques très minces formant électrodes. La régénération automatique d'un tel condensateur, après un bref court-circuit momentané entre électrodes opposées, est due à l'évaporation du métal des électrodes à l'endroit du défaut. La fin de vie d'un tel condensateur est marqué par un court-circuit non réparable des électrodes. Si le court-circuit est important, il peut fondre un fil fusible placé dans son circuit. Dans certains cas, un court-circuit peut provoquer l'explosion du condensateur. Le courant de court-circuit peut aussi être faible au point de ne pas fondre un fil fusible. Dans ce dernier cas, un échauffement intense a lieu au voisinage du point de percement et amène la destruction du condensateur.

On a déjà essayé de se protéger contre les suites néfastes de ces défauts en enfermant le rouleau de condensateur dans un boîtier hermétique, déformable sous l'effet d'une pression interne. Comme la destruction d'un rouleau de condensateur est en général accompagnée d'un dégagement de gaz, ce phénomène a déjà été utilisé pour provoquer la déformation d'une partie du boîtier à laquelle est fixée une extrémité d'un fil de rupture permettant de mettre hors circuit le condensateur en cas d'augmentation de la pression interne.

Le montage d'un tel fil de rupture à l'intérieur d'un boîtier est un procédé coûteux qui renchérit le condensateur de manière sensible.

L'invention a pour but d'obtenir la mise hors circuit d'un condensateur au moyen d'un agencement beaucoup moins coûteux, extrêmement facile à réaliser lors du procédé de fabrication du condensateur.

Il est déjà connu de fabriquer un condensateur auto-régénérable au moyen d'un procédé de fabrication dans lequel on enroule simultanément un premier ruban en matière diélectrique, métallisé d'un des côtés sauf sur un des bords et un deuxième ruban de même constitution, disposé de manière que son bord non métallisé soit opposé au bord non métallisé du premier ruban, dans lequel on insère entre les extrémités des premier et deuxième rubans métallisés enroulés une extrémité d'un ruban d'emballage non métallisé de même largeur environ que lesdits premier et deuxième rubans et dans lequel on recouvre par projection d'un dépôt de métal de part et d'autre part les bords enroulés desdits premier et deuxième rubans, ainsi que du ruban d'emballage. L'utilisation d'un tel ruban d'emballage est décrite notamment dans le brevet belge BE-A-793388 et le brevet anglais GB-807475.

Il est déjà connu d'autre part, d'après la demande de brevet allemand DE-A-2636544, d'enrober un condensateur régénérable d'une première couche métallique, d'une couche isolante fondante ou plastiquement déformable à température plus élevée que la température admise et d'une deuxième couche métallique, lesdites première et deuxième couches métalliques étant reliées électriquement chacune avec une des électrodes du condensateur régénérable.

L'invention se rattache à la technique d'utilisation de rubans d'emballage et nécessite un agencement particulier du ou des rubans d'emballage.

Suivant un premier mode de fabrication, l'invention est caractérisée en ce qu'avant son enroulement on dispose sur le ruban d'emballage, en les solidarisant avec ce dernier, au moins deux feuilles métalliques chacune ayant une longueur d'au moins $3,14 \times D$, chacune distante de l'autre et du ruban métallisé le plus long d'une distance mesurée sur le ruban d'emballage non enroulé égale à au moins 3,14 D, chacune effleurant ou dépassant le bord du ruban d'emballage opposé à celui qu'effleure ou dépasse la feuille métallique voisine, D étant le diamètre du rouleau enroulé.

Suivant un deuxième mode de fabrication, on utilise deux rubans d'emballage. L'invention est alors caractérisée en ce qu'on insère entre les extrémités des premier et deuxième rubans métallisés l'extrémité d'au moins un des deux rubans d'emballage chacun recouvert d'une feuille métallique sur une longueur déterminée, ces feuilles étant disposées de même manière que les métallisations des rubans métallisés.

L'invention est expliquée ci-dessous par rapport à un exemple d'une réalisation en se référant au dessin annexé.

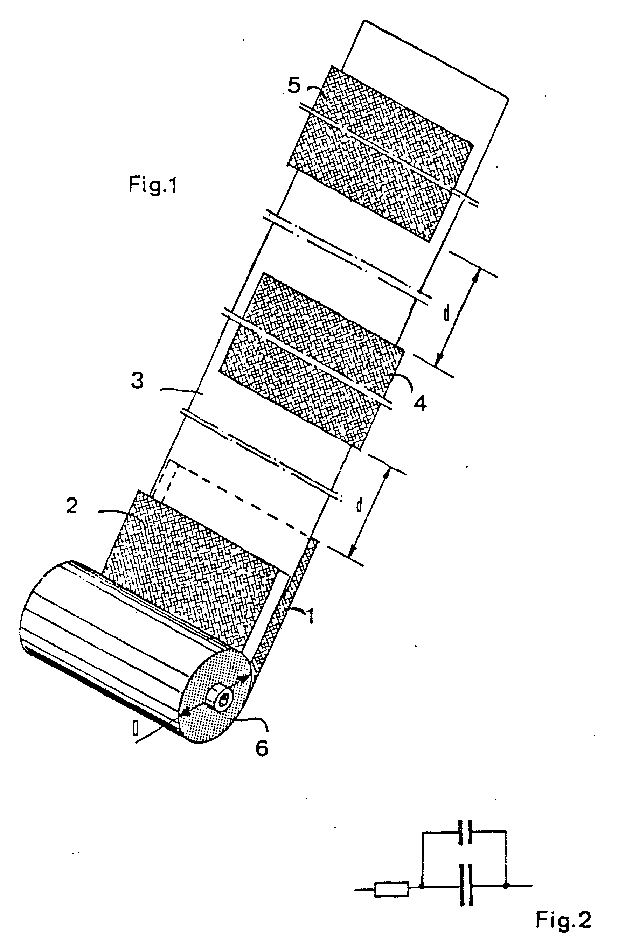

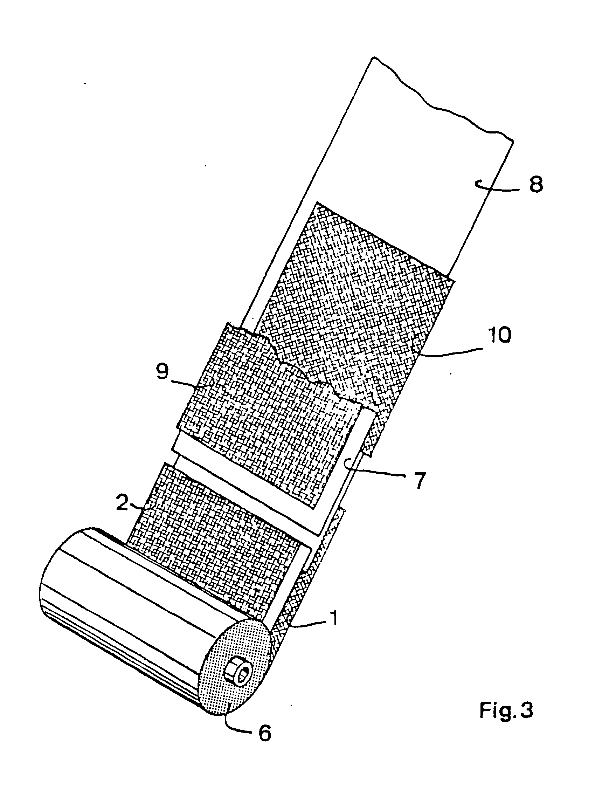

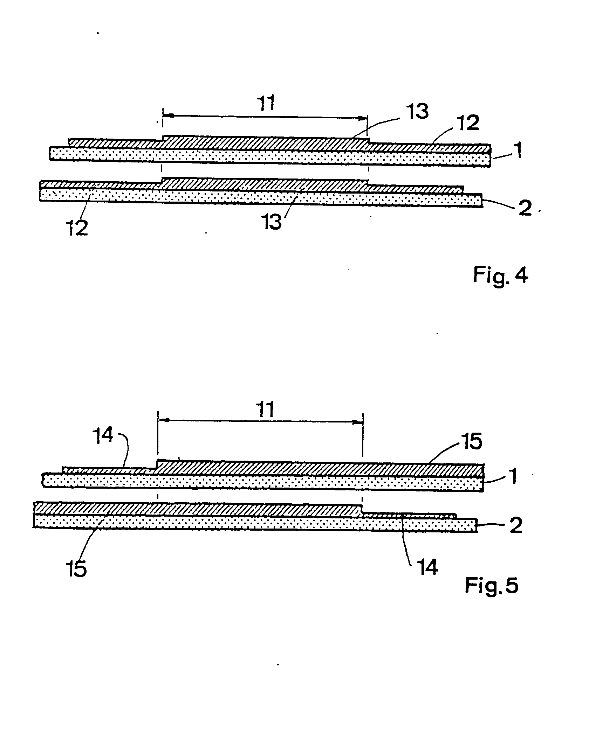

Les figures 1 et 3 de ce dessin sont des vues en perspective de condensateurs pendant le procédé de fabrication suivant l'invention. La figure 2 est un schéma électrique ; les figures 4 et 5 sont deux coupes schématiques de paires de rubans différents.

A la figure 1 un premier ruban 1 en matière diélectrique, par exemple en polypropylène est métallisé du côté supérieur, sauf sur le bord gauche. Un deuxième ruban 2 en la même matière diélectrique est métallisé également du côté supérieur, sauf sur le bord droit. Entre les extrémités libres de ces premier et deuxième rubans 1 et 2 est inséré un ruban d'emballage 3 en matière diélectrique, par exemple également en polypropylène, mais il n'est pas nécessaire de choisir pour ce ruban d'emballage 3 la même matière que pour les premier et deuxième rubans 1 et 2. Il est même avantageux de choisir pour ce ruban d'emballage 3 une matière diélectrique qui se détériore plus facilement en présence d'au moins un des phénomènes accompagnant la destruction du condensateur autorégénérable. Sur un même côté de ce ruban 3, on a disposé deux feuilles d'aluminium 4 et 5 et on les a solidarisées avec le ruban 3, par exemple par thermosoudage. Les feuilles 4 et 5 possèdent chacune une longueur au moins approximativement égale ou supérieure $3,14 \times D$, D étant le diamètre du rouleau de condensateur 6, lorsque les premier et deuxième rubans sont complètement enroulés.

La distance d entre l'extrémité du deuxième ruban qui en l'occurrence est le plus long et le bord voisin de la feuille d'aluminium 4 est supérieure à 3,14 × D et de préférence supérieure à deux fois 3,14 × D.

De même, la distance d entre les bords voisins des feuilles 4 et 5 est supérieure à 3,14 × D et de préférence supérieure à deux fois 3,14 × D.

Après enroulement complet des rubans 1, 2, 3, les deux extrémités latérales du rouleau de condensateur 6 sont recouvertes par projection de métal, par exemple du zinc, suivant le procédé Schoop.

On obtient ainsi un produit selon la figure 2 composé d'un condensateur auto-régénérateur principal, mis en parallèle avec un condensateur non auto-régénérable auxiliaire.

Un tel ensemble fonctionne comme suit : lorsqu'un court-circuit s'établit à un endroit quelconque du condensateur auto-régénérable et lorsque la régénération ne se fait pas, la destruction au voisinage du défaut se propage de proche en proche aux couches voisines et atteint assez rapidement les couches entre les feuilles métalliques 4 et 5 du condensateur auxiliaire. A ce moment, un court-circuit franc s'établit entre les électrodes 4 et 5 dont le courant est suffisamment intense pour déclencher un fusible ou disjoncteur de l'installation dont fait partie le condensateur. Il est évident que si le court-circuit original a lieu dans le condensateur auxiliaire, on se trouve dès le début en présence d'un court-circuit franc. Toutefois en choisissant l'épaisseur de l'isolant entre les électrodes 4 et 5 plus forte ou, pour ce qui concerne les températures de service normal, de meilleure qualité diélectrique que l'isolant entre les métallisations des rubans 1 et 2, la probabilité est faible que le condensateur auxiliaire donne lieu à un court-circuit en l'absence d'un court-circuit non réparable dans le condensateur principal.

Il est évidemment possible de ne pas limiter le nombre de feuilles métalliques appliquées sur le ruban d'emballage à deux feuilles 4 et 5, mais d'en prévoir un nombre quelconque. Il est possible aussi (fig. 3) de prévoir deux rubans d'emballage 7 et 8 chacun recouvert d'une feuille métallique respectivement 9 et 10. Dans ce cas, les feuilles métalliques 9 et 10 sont disposées par rapport aux rubans de même manière que les métallisations des rubans 1 et 2, mais, il n'est pas nécessaire de solidariser une feuille métallique avec chacun des rubans. Il peut même être plus avantageux de solidariser les feuilles métalliques avec un seul des rubans d'emballage par exemple le ruban 7 tandis que l'autre ruban 8 est un ruban simple en matière diélectrique.

Les condensateurs obtenus au moyen du procédé de fabrication suivant l'invention se présentent comme des condensateurs normaux, très simples. En effet, bien qu'ils soient constitués d'un condensateur auto-régénérable entouré d'un condensateur non-auto-régénérable tous deux mis en parallèle, cette mise en parallèle ne nécessite aucune disposition ni opération particulière. Elle est réalisée, au contraire, automatiquement, lors du recouvrement par projection de métal des deux faces latérales du rouleau de condensateur.

Dans certaines conditions d'utilisation, il est cependant possible que des courts-circuits non francs se produisent à proximité d'une extrémité latérale du rouleau proche de la surface recouverte par projection de métal et que ces courts-circuits non francs ne soient pas détectés dans un délai suffisamment court par le court-circuit franc du condensateur auxiliaire entourant le condensateur auto-régénérable.

Un tel danger peut être évité très facilement, selon une réalisation préférée de l'invention par le fait que pendant le procédé de fabrication du condensateur auto-régénérable on applique sur les rubans isolants des couches de métal dont l'épaisseur moyenne diminue de part et d'autre d'une bande localisée à une distance déterminée des bords des rubans.

Les figures 4 et 5 montrent deux coupes schématiques de paires de rubans différents formant des rouleaux de condensateurs auto-régénérables. Un rouleau de condensateur 6 est formé par un enroulement d'une paire de rubans isolants 1, 2 métallisés. La métallisation de ces rubans 1 et 2 n'est pas uniforme, mais présente une épaisseur moyenne sensiblement plus faible de part et d'autre d'une bande 11 dont la ligne médiane s'enroule dans un plan perpendiculaire à l'axe du rouleau, notamment, par exemple, le plan de symétrie, perpendiculaire à l'axe du rouleau.

Suivant la figure 4, une couche métallisée 12, de chaque ruban 1 et 2 présente un bourrelet 13 à l'endroit de la bande 11. Cette disposition n'est cependant pas unique, car il suffit, pour obtenir l'effet désiré, que l'épaisseur moyenne de l'ensemble des couches sur les deux rubans 3 et 4 présente une réduction en dehors de la bande 11. Ce résultat peut être obtenu aussi, par exemple, par une métallisation suivant la figure 5, c'est-à-dire par des couches métallisées présentant d'un côté de la bande 11 une épaisseur 14 faible et, à l'endroit de la bande 11 même et de l'autre côté, une forte épaisseur 15. La forte épaisseur se trouvant, de préférence, du côté où la métallisation s'étend jusqu'au bord du ruban isolant sur lequel est appliquée, par exemple par procédé Schoop, une électrode de contact, par exemple du zinc. Au voisinage du bord, un renforcement supplémentaire, non montré sur le dessin, peut être prévu, comme cela est déjà connu, afin d'améliorer le contact entre la couche de zinc et l'électrode du condensateur.

Il va de soi que la bande 11 ne doit pas nécessairement être symétrique par rapport au rouleau et s'enrouler à l'endroit du plan de symétrie du rouleau, perpendiculaire à l'axe de ce dernier, mais peut s'enrouler en un endroit décalé par rapport à ce plan de symétrie.

Il est évidemment possible de diminuer l'étendue latérale du condensateur auxiliaire, non régénérable et de la limiter au voisinage des endroits
où est enroulée la bande 11 à métallisation
normale où se produisent les détériorations, mais
une telle mesure ne se justifie que pour des
matières diélectriques coûteuses du condensateur auxiliaire, non régénérable, car on supprime
alors l'avantage de la mise en parallèle des deux
condensateurs auto-régénérable et auxiliaire au
moyen d'une seule opération de projection de
métal sur les extrémités latérales du rouleau de
condensateur complet.

Au contraire, lorsque le condensateur auxiliaire, non régénérable possède la largeur du
condensateur auto-régénérable, il est possible de
réduire fortement les surfaces des parties des
électrodes à épaisseur moyenne réduite ou ce qui
revient au même d'élargir la bande 11 à épaisseur
normale. La largeur de cette bande 11 peut être
choisie, de préférence, inférieure ou environ
égale à la largeur moins le diamètre du rouleau
enroulé complet.

Il va de soi que les limites entre métallisation de
faible épaisseur et métallisation d'épaisseur normale ne doivent pas être des variations brutales
d'épaisseur, mais peuvent s'étaler de façon progressive sur une certaine largeur.

**Revendications**

1. Procédé de fabrication d'un condensateur
auto-régénérable dans lequel on enroule simultanément un premier ruban (1) en matière diélectrique métallisé d'un des côtés sauf sur un des
bords et un deuxième ruban (2) de même constitution que le premier ruban, disposé de manière
que son bord non métallisé soit opposé au bord
non métallisé du premier ruban, dans lequel on
insère entre les extrémités des premier et
deuxième rubans métallisés enroulés une extrémité d'un ruban d'emballage (3) non métallisé de
même largeur environ que lesdits premier et
deuxième ruban et dans lequel on recouvre par
projection d'un dépôt de métal de part et d'autre
les bords enroulés desdits premier et deuxième
rubans (1, 2), ainsi que du ruban d'emballage (3),
caractérisé en ce qu'avant son enroulement, on
dispose sur ce ruban d'emballage (3) en les
solidarisant avec ce dernier au moins deux feuilles métalliques (4, 5) chacune ayant une longueur
d'au moins 3,14 × D chacune distante de l'autre et
du ruban métallisé le plus long (1) d'une distance
mesurée sur le ruban (3) non enroulé égale à au
moins 3,14 D, chacune affleurant ou dépassant le
bord du ruban d'emballage (3) opposé à celui
qu'affleure ou dépasse la feuille métallique voisine, D étant le diamètre du rouleau (6) enroulé.

2. Procédé de fabrication d'un condensateur
auto-régénérable dans lequel on enroule simultanément un premier ruban (1) en matière diélectrique métallisé d'un des côtés sauf sur un des
bords et un deuxième ruban (2) de même constitution que le premier ruban, disposé de manière
que son bord non métallisé soit opposé au bord non métallisé du premier ruban (1), dans lequel
on insère entre les extrémités des premier et
deuxième rubans (1, 2) métallisés enroulés une
extrémité d'un ruban d'emballage (7, 8) non
métallisé de même largeur environ que lesdits
premier et deuxième ruban (1, 2) et dans lequel
on recouvre par projection d'un dépôt de métal
de part et d'autre les bords enroulés desdits
premier et deuxième rubans (1, 2), ainsi que du
ruban d'emballage (7, 8) caractérisé en ce qu'on
insère entre les extrémités des premier et
deuxième rubans (1, 2) métallisés l'extrémité d'au
moins un de deux rubans d'emballage (7, 8)
chacun recouvert d'une feuille métallique (9, 10)
sur une longueur déterminée, ces feuilles (9, 10)
étant disposées de même manière que les métallisations des rubans métallisés (1, 2).

3. Procédé suivant la revendication 2, caractérisé en ce qu'on solidarise les deux feuilles
métalliques (9, 10) avec un seul (7) des deux
rubans d'emballage (7, 8).

4. Procédé suivant une des revendications précédentes, caractérisé en ce qu'on choisit comme
matière diélectrique des rubans d'emballage (3, 7,
8) une matière différente de celle de la matière
diélectrique des rubans métallisés (1, 2).

5. Procédé suivant une des revendications précédentes, caractérisé en ce que lors de la métallisation desdits premier (1) et deuxième (2) rubans
isolants, on applique sur ces rubans des couches
de métal (12, 13, 14, 15) dont l'épaisseur moyenne
diminue de part et d'autre d'une bande (11) à
épaisseur moyenne normale localisée à des distances déterminées des bords des rubans (1, 2).

6. Procédé suivant la revendication 5, caractérisé en ce qu'on étend la métallisation à épaisseur
moyenne normale desdits premier (1) et
deuxième (2) rubans à une bande de largeur
environ égale ou inférieure à la largeur moins le
diamètre du rouleau (6) complètement enroulé.

**Claims**

1. Method of making a self-healing capacitor,
wherein there are wound simultaneously a first
band (1) made of dielectric material metal-coated
on one of its sides except at one of its edge
regions and a second band (2) constituted
similarly to the first band and arranged so that its
edge region which is not metal-coated is opposite
from the non-metal-coated edge region of the
first band, wherein there is inserted between the
ends of the wound metal-coated first and second
bands one end of a wrapping band (3) which is
not metal coated and is of the same width
approximately as the said first and second bands,
and wherein the wound edges of the said first and
second bands (1, 2) and of the wrapping band (3)
are covered by spraying-on a deposit of metal at
both sides, characterised in that before it is
wound-up there is arranged on this wrapping
band (3), making them integral with the latter, at
least two metal foils (4, 5) each having a length of
at least 3.14 × D, each spaced from the other and from the longer metal-coated band (1) by a distance measured on the band (3) in the non-wound state equal to at least 3.14 D, each finishing flush with or projecting beyond the edge of the wrapping band (3) opposite to that which the adjacent metal foil finishes flush with or projects beyond, D being the diameter of the wound-up roll (6).

2. Method of making a self-healing capacitor, wherein there are wound simultaneously a first band (1) made of dielectric material metal-coated on one of its sides except at one of its edge regions and a second band (2) having the same constitution as the first band and arranged so that its edge region which is not metal-coated is opposite from the metal-coated edge region of the first band (1), wherein there is inserted between the ends of the wound metal-coated first and second bands (1, 2) one end of a non-metal-coated wrapping band (7, 8) of the same width approximately as the said first and second bands (1, 2), and wherein the wound edges of the said first and second bands (1, 2) and of the wrapping band (7, 8) are covered by spraying-on a deposit of metal at both sides, characterised in that there is inserted between the ends of the first and second metal-coated bands (1, 2) the end of at least one of two wrapping bands (7, 8) each covered with a metal foil (9, 10) over a specific length, these foils (9, 10) being arranged in the same way as ·the metal coatings of the metal-coated bands (1, 2).

3. Method according to claim 2, characterised in that the two metal foils (9, 10) are connected securely to only one (7) of the two wrapping bands (7, 8).

4. Method according to one of the preceding claims, characterised in that a material different from that of the dielectric material of the metal-coated bands (1, 2) is chosen as the dielectric material.

5. Method according to one of the preceding claims, characterised in that when the said first (1) and second (2) insulating bands are metal-coated there are applied to these bands layers of metal (12, 13, 14, 15) whose mean thickness decreases at the two sides of a strip (11) of normal mean thickness located at specific distances from the edges of the bands (1, 2).

6. Method according to claim 5, characterised in that the metal coating of normal mean thickness of the said first (1) and second (2) bands is made to extend over a strip of a width approximately equal to or smaller than the width less the diameter of the completely wound-up roll (6).

**Patentansprüche**

1. Verfahren zur Herstellung eines selbstheilenden Kondensators, bei dem ein erstes Band (1) aus dielektrischem Material, das auf einer der Seiten, außer auf einem der Ränder, metallisiert ist, und ein zweites Band (2) von gleicher Beschaffenheit wie das erste Band, das so angeordnet ist, daß sein nicht metallisierter Rand gegenüber dem nicht metallisierten Rand des ersten Bandes angeordnet ist, gleichzeitig aufgewickelt werden, bei dem zwischen den Enden des ersten und zweiten aufgewickelten metallisierten Bandes ein Ende eines nicht metallisierten Bandes (3) von ungefähr gleicher Breite wie das besagte erste und zweite Band eingefügt wird, und bei dem die aufgewickelten Ränder des besagten ersten und zweiten Bandes (1, 2), sowie des Umhüllungsbandes (3) auf beiden Seiten durch Aufspritzen mit einer Metallschicht bedeckt werden, dadurch gekennzeichnet, daß auf dem Umhüllungsband (3) vor dem Aufwickeln mindestens zwei metallische Folien (4, 5) angeordnet werden und mit dem Umhüllungsband (3) fest verbunden werden, von denen jede eine Länge von mindestens 3,14 × D hat, jede von der anderen und von dem längeren metallisierten Band (1) um eine auf dem nicht aufgewickelten Umhüllungsband (3) gemessene Strecke von mindestens 3,14 D entfernt ist, und jede mindestens bis zu dem Rand des Umhüllungsbandes (3) reicht, der gegenüber dem Rand liegt, bis zu dem die benachbarte metallische Folie mindestens reicht, wobei D der Durchmesser der Wicklung (6) ist.

2. Verfahren zur Herstellung eines selbstheilenden Kondensators, bei dem ein erstes Band (1) aus dielektrischem Material, das auf einer der Seiten, außer auf einem der Ränder, metallisiert ist, und ein zweites Band (2) von gleicher Beschaffenheit wie das erste Band, das so angeordnet ist, daß sein nicht metallisierter Rand gegenüber dem nicht metallisierten Rand des ersten Bandes (1) angeordnet ist, gleichzeitig aufgewickelt werden, bei dem zwischen den Enden des ersten und zweiten aufgewickelten metallisierten Bandes (1, 2) ein Ende eines nicht metallisierten Umhüllungsbandes (7, 8) von ungefähr gleicher Breite wie das besagte erste und zweite Band (1, 2) eingefügt wird, und bei dem die aufgewickelten Ränder des besagten ersten und zweiten Bandes (1, 2), sowie des Umhüllungsbandes (7, 8) auf beiden Seiten durch Aufspritzen mit einer Metall-schicht bedeckt werden, dadurch gekennzeich-net, daß zwischen den Enden des ersten und zweiten metallisierten Bandes (1, 2) das Ende von mindestens einem von zwei Umhüllungsbändern (7, 8) eingefügt wird, von denen jedes über eine bestimmte Länge mit einer metallischen Folie (9, 10) bedeckt ist, wobei diese Folien (9, 10) in der gleichen Weise wie die Metallisierungen der metallisierten Bänder (1, 2) angeordnet sind.

3. Verfahren gemäß Anspruch 2, dadurch gekennzeichnet, daß die zwei metallischen Folien (9, 10) mit einem einzigen (7) der zwei Umhüllungsbänder (7, 8) fest verbunden werden.

4. Verfahren gemäß einem der vorhergehenden Ansprüche, dadurch gekennzeichnet, daß als dielektrisches Material für die Umhüllungsbänder (3, 7, 8) ein von dem Material für die metallisierten Bänder (1, 2) verschiedenes Material gewählt wird.

5. Verfahren gemäß einem der vorhergehenden Ansprüche, dadurch gekennzeichnet, daß bei der Metallisierung des besagten ersten (1) und zweiten (2) isolierenden Bandes auf diese Bänder Metallschichten (12, 13, 14, 15) aufgebracht werden, deren mittlere Dicke auf beiden Seiten eines Streifens (11) mit normaler mittlerer Dicke abnimmt, der in bestimmten Abständen von den Rändern der Bänder (1, 2) gelegen ist.

6. Verfahren gemäß Anspruch 5, dadurch gekennzeichnet, daß die Metallisierung mit normaler mittlerer Dicke des besagten ersten (1) und zweiten (2) Bandes auf einen Streifen von ungefähr gleicher Dicke wie, oder kleinerer Dicke als die Breite der Wicklung (6) minus dem Durchmesser der vollständig aufgewickelten Wicklung (6) ausgedehnt wird.

Fig.1

5

3

2

4

d

d

1

D

6

Fig.2

Fig. 3

Fig. 4

Fig.5